# EUROPEAN PATENT SPECIFICATION

(11) **EP 1 011 066 B1**
(45) Date of publication and mention of the grant of the patent: **24.11.2004**
(21) Application number: 98310280.7
(22) Date of filing: 15.12.1998
(51) Int. Cl.: G06K 11/18

(54) **A holding ring type hand controller device**
Handbedienungseinrichtung in Form eines Halteringes
Dispositif de contrôle manuel en forme d'anneau

(43) Date of publication of application: 21.06.2000
(73) Proprietor: Tai-Her, Yang, Taipei (TW)
(72) Inventor: Tai-Her, Yang, Taipei (TW)
(74) Representative: Wright, Howard Hugh Burnby

(56) References cited:
- EP-A- 0 660 258
- WO-A-91/07826
- WO-A-96/39679

## Description

The present invention relates to a hand controller device. The shape of the cases of conventional hand held controller devices, such as remote controllers, hand game players, hand held electronic counter devices or other hand held man-machine interface controller devices are designed to be held in the hand, but tend to have a large bulky volume and not be very controllable.

WO 96/39679 discloses a cursor control system and method for use with a computer having a visual display. The control system comprises a cursor control device and receiver device. The cursor control device controls both the relative position of the cursor on the display and the speed of its movement. The cursor control device is preferably mounted on a user's index finger, and is manipulated by the thumb of the user. Alternatively, the device can be laid flat, and its buttons operated whilst laid flat.

WO 91/07826 discloses a bi-directional operable hand attachable computer control system. The device transmits computer commands, control and input signals to a base transceiver device which detects and converts input device radiated signals into electrical signals to which the computer is programmed to respond. The device includes a strap by which the device may be attached to a finger of a person's hand.

According to a first aspect of the present invention, a ring type hand controller device comprises: a casing body arranged as a ring with at least one transverse finger holding hole extending therethrough, the hole being arranged to fit over a single finger or multiple fingers and by which the device is held; a direction control input positioned to be operated by the fingers of the hand which are holding the device; and a display device located on the surface of the casing body, whereby the direction control input is used to produce digital or analogue display signals to drive the display device, and wherein the direction control input is either a roller ball or a cross type switch. In some embodiments, the device includes a plurality of finger holding holes for multiple insertion.

The device may include one or more interface devices taken from the group of:
switches, indicating lights, speaker, timer, and counter. In addition, each of the interface devices can be arranged to interact with the digital or analogue signals produced by the direction control input and by the display. Whereby the direction control input is roller ball, the roller ball may be arranged as a push button whereby the roller ball can be depressed to operate a switch.

The direction control input can be any one of a resistance type, a capacitor type, an optical type, a pulse type or an encoding type. The casing body may contain a circuit including batteries, electrical, or electronic circuits or software by which the digital or analogue signals are produced. The casing body may be an integrated structure, or the casing body and the ring can be constructed of two or more individual components.

According to a second aspect of the invention, a ring type hand controller device comprises: a casing body; a ring-shaped handle arranged to define a transverse finger holding hole by which the device is held by a finger of a hand, the device further comprising a direction control input positioned to be operated by the fingers of the hand which are holding the device, and a display device located on the surface of the casing body, whereby the direction control input and the display device are used to produce digital or analogue signals to drive the display device, and wherein the direction control input is either a roller ball or a cross type switch.

The casing body may include two slots in which the ring shaped handle can be spring mounted. One part of the ring shaped handle can be fixed to the casing body by screws or bolts, or is clamped and fixed within the casing body.

Embodiments of the present invention will now be described by way of example only with reference to the figure in which:
Figure 1 is perspective view a first embodiment;
Figure 2 is a top plan view of the device shown in Figure 1;
Figure 3 is a side view of the device of Figure 1;
Figure 4 is a front view of the device of Figure 1;
Figure 5 is a 3-D assembly drawing of the second embodied example.
Figure 6 is the top view of Figure 5.
Figure 7 is the side view of Figure 5.
Figure 8 is the front view of Figure 5.
Figure 9 is a 3-D assembly drawing of the third embodied example.
Figure 10 is the top view of Figure 9.
Figure 11 is the side view of Figure 9.
Figure 12 is the front view of Figure 9.
Figure 13 is a 3-D assembly drawing of the fourth embodied example.
Figure 14 is the top view of Figure 13.
Figure 15 is the side view of Figure 13.
Figure 16 is the front view of Figure 13.
Figure 17 is a 3-D assembly drawing of the fifth embodied example.
Figure 18 is a 3-D assembly drawing of the sixth embodied example.

### DETAILED DESCRIPTION OF THE PREFERRED EMBODIMENTS

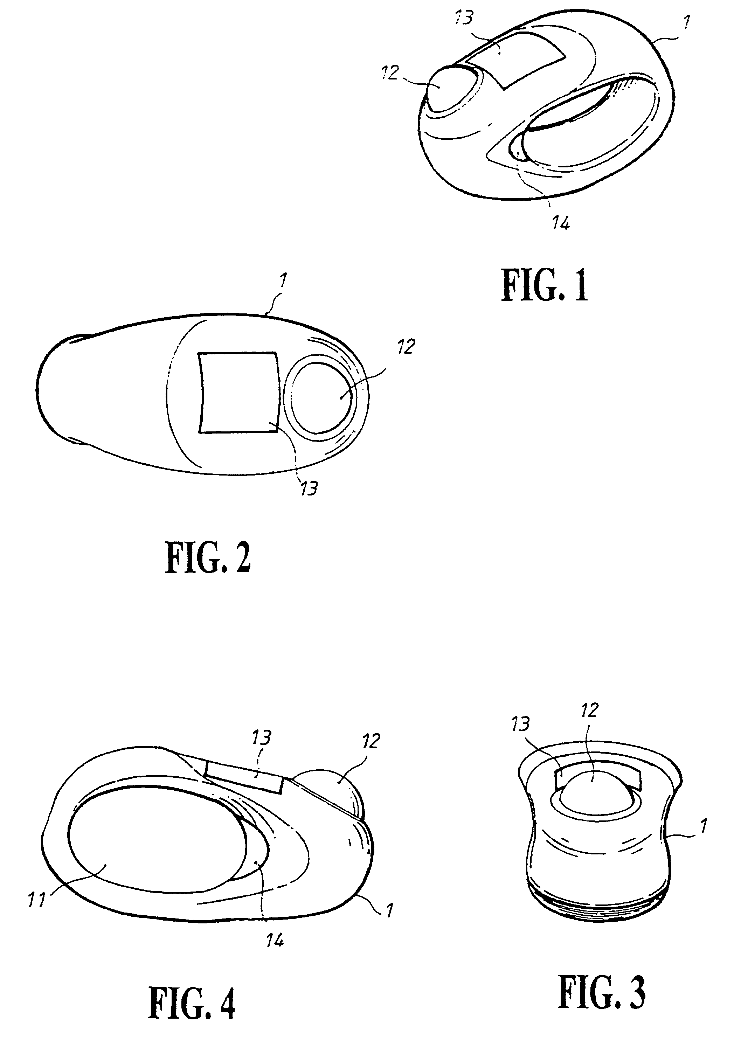

With reference to the first embodiment illustrated in Figures 1 to 4, a casing 1 is shown wherein it is mainly that the casing body 1 is transversely penetrated with a finger holding hole 11 suitable for finger insertion and holding, and the surface of casing 1 is further installed with an active rolling ball 12, display screen 13 and an optional interface device 14, whereby the said active rolling ball 12 is used to produce digital or analogue signals to drive the display screen 13, in addition, the transversely penetrated finger holding hole 11 of the said casing can be principally presented in one or more than one penetrated holes for single finger or multiple fingers insertion; furthermore, the optional interface device 14 at the outside of the said casing 1 can be further optionally installed according to functional requirements including 1)Switches 2)indicating lights 3)speaker 4)timer 5)counter, etc. wherein one or more than one of them is interacted with the digital or analog signals produced by the main control ball 12 while its inside is installed with a functional circuit constituted by batteries, electrical or electronic circuits or relevant softwares according to functional requirements for matching with the digital or analog signals produced by the main control ball 12 and correspondingly to drive the display screen 13, thereby to constitute the various function cycles of the holding ring type hand controller device of the subject case.

The aforesaid main control ball 12 can be further made to have push button on/off function or cross operated toggle switch function at the same time, whereof the relationships between the said main control ball or cross switch includes the resistance type, capacitor type, photo type, pulse or encoding type, etc. or further to include the finger agitating but non-mechanical translation detecting type detector devices such as induction type, pressure sensing type, photo type, variable resistance type, or variable capacitor types, etc.

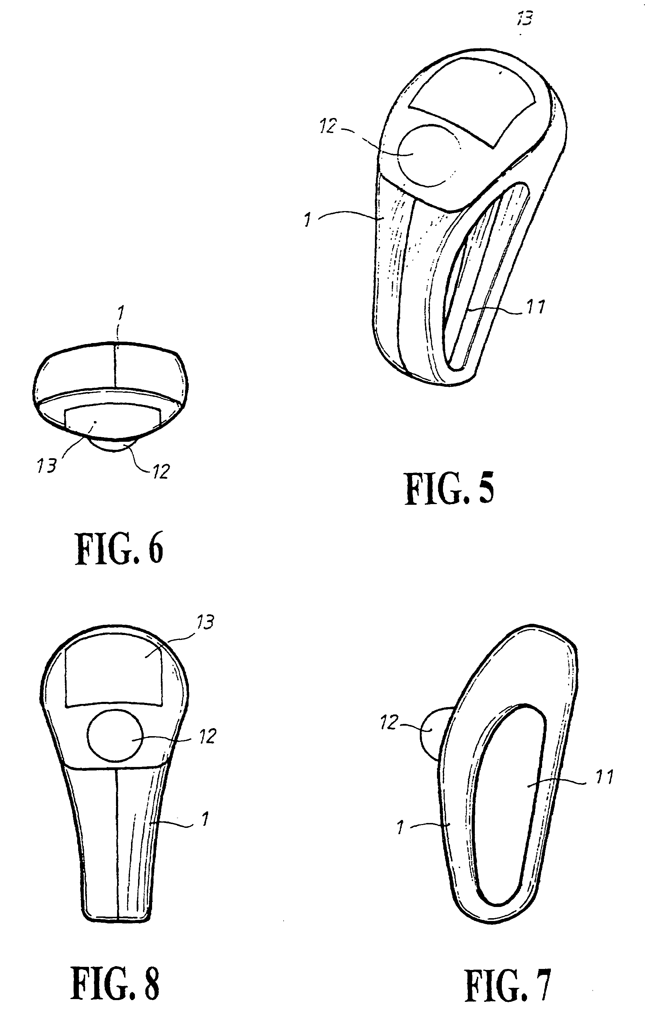

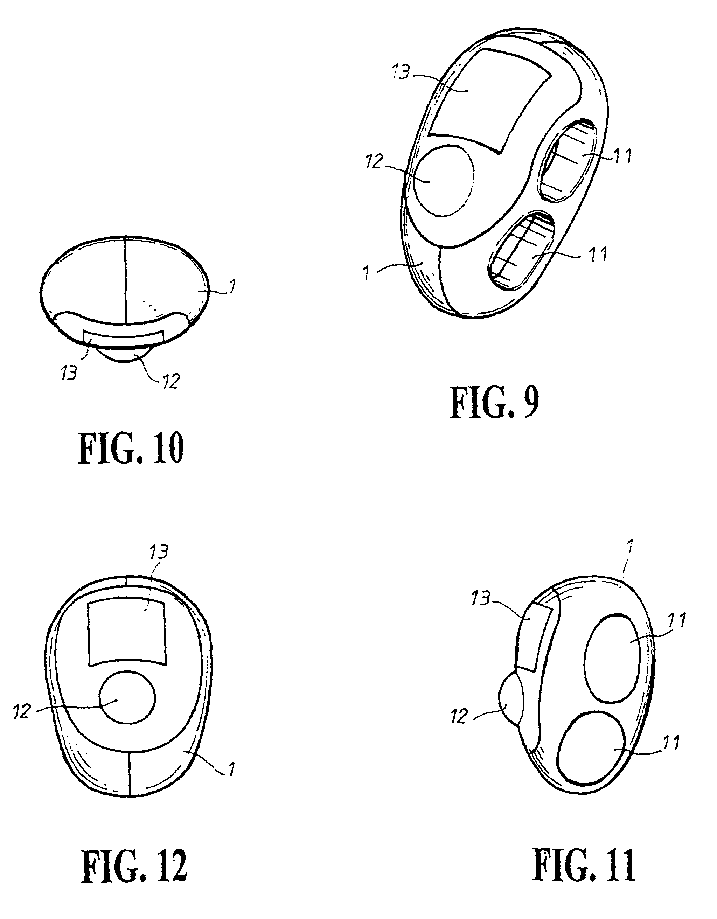

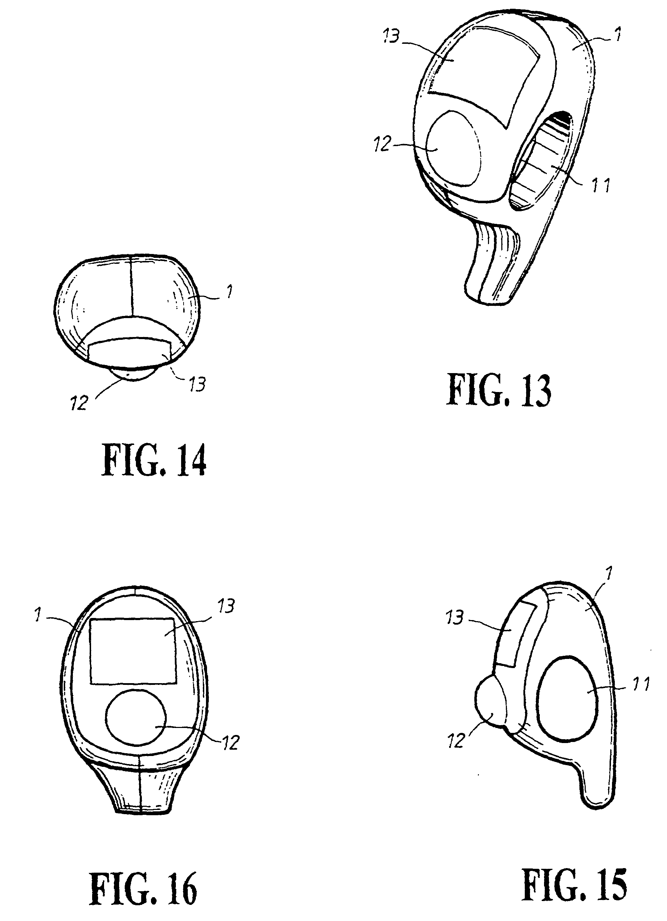

Besides, adequate design changes can be made for the neighboring positions of the optional interface devices 14 such as the active control ball 12, display screen 13 and 1)Switches 2)indicating lights 3)speaker 4)timer 5)counter, etc. Wherein it does not need to be limited to only one kind such as that figures 5 to 8, figures 9 to 12 or figures 13 to 16 are all embodying examples with different appearances, i.e. as long as the random design change of neighboring positions, it is still an application of equivalent operations.

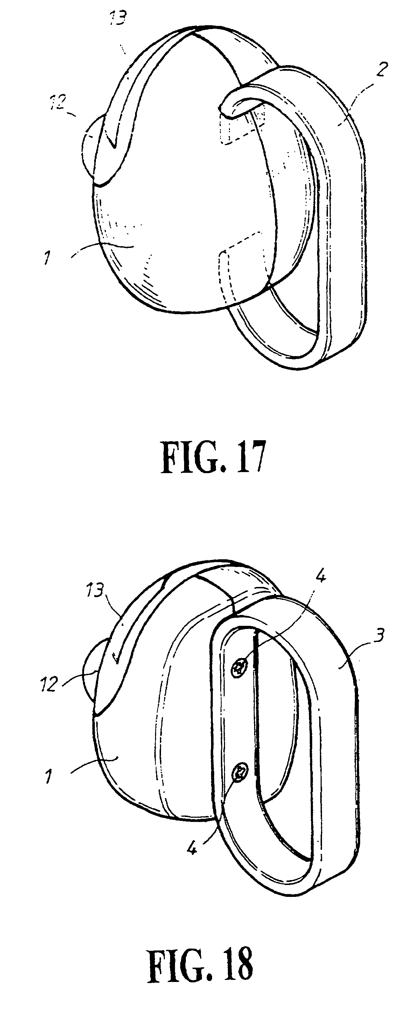

Besides of the various embodying examples, the said handle or ring type structure and casing can be assembled by one or more than two individual components made of the same material or different materials. In addition, the said casing 1 can be inlayed or lock fixed with a spring force ring shape handle 2 as shown in figure 17 or a closed circular ring shape handle 3 (as shown in figure 18); i.e. as according to the embodying example shown in figure 17, the spring force ring shape handle 2 is by utilizing the two corresponding inlaying slots of the casing body for inlaying assembly, thereby to allow the said spring force ring shape handle 2 suitable for single hand holding operation in the air; and as according to the embodying example in figure 18, one side of the closed circular ring shape handle 3 is lock fixed with screw bolts on the back of the casing body (or one side of the closed circular ring shape handlle is clamped and lock fixed inside the casing body ), thereby to obtain the same effect of single hand holding operation in the air.

As summarized from the above descriptions, the invention is aimed at improving the structure types of the casing body 1 of the holding ring type hand controller device, wherein it is innovative to have the transversely penetrated finger holding holes to allow for single hand holding, and while in holding, the active rolling ball can be agitated by finger to do control operations, therefore, holding method of the subject innovative design on the man-machine interface embodying types is much more convenient than the conventional ones.

## Claims

1. A ring-type hand controller device comprising:
a casing body (1) arranged as a ring with at least one transverse finger holding hole (11) extending therethrough, the hole being arranged to fit over a single finger or multiple fingers and by which hole the device is held,
a direction control input means (12) positioned to be operated by the fingers of the hand which are holding the device,
the controller device being **characterised by**
a display device (13) located on the surface of the casing body (1),
whereby the direction control input means (12) is used to produce digital or analogue display signals to drive the display device (13), and wherein the direction control input means (12) is either a roller ball or a cross type switch.

2. A ring-type hand controller device according to claim 1, indicating a plurality of finger holding holes (11) for multiple finger insertion.

3. A ring-type hand controller device according to any one of the preceding claims, further comprising one or more interface devices taken from the group of:
switches
indicating lights
speaker
timer
counter.

4. A ring-type hand controller device according to claim 3, wherein the or each of the interface devices is arranged to interact with the digital or analogue signals produced by the direction control input (13).

5. A ring-type hand controller device according to any one of the preceding claims wherein, where the direction control input (12) is a roller ball, the roller ball is arranged as a push button whereby the roller ball can be depressed to operate a switch.

6. A ring-type hand controller device according to any one of the preceding claims, wherein the direction control input (12) is one of a resistance type, a capacitor type, an optical type, a pulse type or an encoding type.

7. A ring-type hand controller device according to any one of the preceding claims, wherein the casing body (1) contains a circuit including batteries, electrical or electronic circuits or software by which the digital or analogue signals are produced.

8. A ring-type hand controller device according to any one of claims 1 to 7, wherein the casing body (1) is an integrated structure.

9. A ring-type hand controller device comprising:
a casing body (1),
a ring-shaped handle (2, 3) arranged to define a transverse finger holding hole by which hole the device is held by a finger of a hand, )
a direction control input means (12) positioned to be operated by the fingers of the hand which are holding the device,
the controller device being **characterised by**
a display device (13) located on the surface of the casing body (1),
whereby the direction control input means (12) and the display device (13) are used to produce digital or analogue signals to drive the display device (13), and wherein the direction control input means (12) is either a roller ball or a cross type switch.

10. A ring-type hand controller device according to claim 9, wherein the casing (1) body includes two slots in which the ring-shaped handle (2) can be spring-mounted.

11. A ring-type hand controller device according to claim 9, wherein one part of the ring-shaped handle (2, 3) is fixed to the casing body (1) by screws or bolts, or is clamped and fixed within the casing body (1).

## Patentansprüche

1. Ringartiges Handsteuergerät, mit
einem Gehäusekörper (1), der als ein Ring ausgebildet ist, durch welchen sich wenigstens ein quer verlaufendes Fingerhalteloch (11) hindurch erstreckt, wobei das Loch so ausgebildet ist, dass es über einen einzelnen Finger oder mehrere Finger passt, und durch welches Loch das Gerät gehalten wird,
einer Richtungssteuereingabeeinrichtung (12), die so angeordnet ist, dass sie durch die Finger der Hand, welche das Gerät halten, betätigt wird,
wobei das Steuergerät **gekennzeichnet ist durch**
eine Anzeigevorrichtung (13), die auf der Oberfläche des Gehäusekörpers (1) angeordnet ist,
wobei die Richtungssteuereingabeeinrichtung (12) benutzt wird, um digitale oder analoge Anzeigesignale zu erzeugen, um die Anzeigevorrichtung (13) anzutreiben, und wobei die Richtungssteuereingabeeinrichtung (12) entweder eine Rollkugel oder ein kreuzartiger Schalter ist.

2. Ringartiges Handsteuergerät nach Anspruch 1, mit mehreren Fingerhaltelöchern (11) für den Einschub mehrerer Finger.

3. Ringartiges Handsteuergerät nach einem der vorhergehenden Ansprüche, ferner mit einer oder mehreren Schnittstellenvorrichtungen aus der Gruppe:
Schalter
Anzeigelichter
Lautsprecher
Zeitgeber
Zähler.

4. Ringartiges Handsteuergerät nach Anspruch 3, bei welchem die oder jede der Schnittstellenvorrichtungen so ausgebildet ist, dass sie mit den durch die Richtungssteuereingabeeinrichtung (13) erzeugten digitalen oder analogen Signalen wechselwirkt.

5. Ringartiges Handsteuergerät nach einem der vorhergehenden Ansprüche, bei welchem, wenn die Richtungssteuereingabeeinrichtung (12) eine Rollkugel ist, die Rollkugel als ein Druckknopf ausgebildet ist, wodurch die Rollkugel niedergedrückt werden kann, um einen Schalter zu betätigen.

6. Ringartiges Handsteuergerät nach einem der vorhergehenden Ansprüche, bei welchem die Richtungssteuereingabeeinrichtung (12) eine eines Widerstandstyps, eines Kapazitätstyps, eines optischen Typs, eines Impulstyps oder eines Codiertyps ist.

7. Ringartiges Handsteuergerät nach einem der vorhergehenden Ansprüche, bei welchem der Gehäusekörper (1) eine Schaltung mit Batterien, elektrischen oder elektronischen Schaltungen oder Software enthält, durch welche die digitalen oder analogen Signale erzeugt werden.

8. Ringartiges Handsteuergerät nach einem der Ansprüche 1 bis 7, bei welchem der Gehäusekörper (1) eine integrierte Konstruktion ist.

9. Ringartiges Handsteuergerät, mit
einem Gehäusekörper (1),
einem ringförmigen Griff (2, 3), der so ausgebildet ist, dass er ein quer verlaufendes Fingerhalteloch definiert, durch welches Loch das Gerät durch einen Finger einer Hand gehalten wird,
einer Richtungssteuereingabeeinrichtung (12), die so ausgebildet ist, dass sie durch die Finger der Hand, welche das Gerät halten, betätigt wird,
wobei das Steuergerät **gekennzeichnet ist durch**
eine Anzeigevorrichtung (13), die an der Oberfläche des Gehäusekörpers (1) angeordnet ist,
wobei die Richtungssteuereingabeeinrichtung (12) und die Anzeigevorrichtung (13) benutzt werden, um digitale oder analoge Signale zu erzeugen, um die Anzeigevorrichtung (13) anzutreiben, und wobei die Richtungssteuereingabeeinrichtung (12) entweder eine Rollkugel oder ein kreuzartiger Schalter ist.

10. Ringartiges Handsteuergerät nach Anspruch 9, bei welchem der Gehäusekörper (1) zwei Schlitze enthält, in welchen der ringförmige Griff (2) federnd gelagert montiert sein kann.

11. Ringartiges Handsteuergerät nach Anspruch 9, bei welchem ein Teil des ringförmigen Griffs (2, 3) an dem Gehäusekörper (1) durch Schrauben oder Bolzen befestigt ist oder in dem Gehäusekörper (1) verklemmt und befestigt ist.

## Revendications

1. Dispositif de commande à main du type bague comprenant :
un corps de boîtier (1) agencé comme une bague et à travers lequel s'étend au moins un trou transversal pour contenir un doigt (11), le trou étant agencé pour recevoir un seul doigt ou de multiples doigts, le dispositif étant tenu par le trou,
des moyens d'entrée de commande de direction (12) positionnés pour être actionnés par les doigts de la main qui tiennent le dispositif,
le dispositif de commande étant **caractérisé par**
un dispositif d'affichage (13) situé sur la surface du corps de boîtier (1),
moyennant quoi les moyens d'entrée de commande de direction (12) sont utilisés pour produire des signaux d'affichage numériques ou analogiques pour commander le dispositif d'affichage (13), et dans lequel les moyens d'entrée de commande de direction (12) sont soit une boule roulante, soit un commutateur du type en croix.

2. Dispositif de commande à main du type bague selon la revendication 1, présentant une pluralité de trous pour contenir des doigts (11) pour l'insertion de multiples doigts.

3. Dispositif de commande à main du type bague selon l'une quelconque des revendications précédentes, comprenant en outre un ou plusieurs dispositifs d'interface choisis dans le groupe consistant en :
des commutateurs
des voyants
un haut-parleur
un registre d'horloge
un compteur.

4. Dispositif de commande à main du type bague selon la revendication 3, dans lequel le dispositif d'interface ou chacun des dispositifs d'interface est agencé pour interagir avec les signaux numériques ou analogiques produits par les moyens d'entrée de commande de direction (13).

5. Dispositif de commande à main du type bague selon l'une quelconque des revendications précédentes, dans lequel, lorsque les moyens d'entrée de commande de direction (12) sont une boule roulante, la boule roulante est agencée comme un bouton-poussoir, moyennant quoi la boule roulante peut être enfoncée afin d'actionner un commutateur.

6. Dispositif de commande à main du type bague selon l'une quelconque des revendications précédentes, dans lequel les moyens d'entrée de commande de direction (12) sont de type résistif, de type capacitif, de type optique, de type impulsionnel ou de type à codage.

7. Dispositif de commande à main du type bague selon l'une quelconque des revendications précédentes, dans lequel le corps de boîtier (1) contient un circuit comprenant des batteries, des circuits électriques ou électroniques ou un logiciel par lesquels les signaux numériques ou analogiques sont produits.

8. Dispositif de commande à main du type bague selon l'une quelconque des revendications 1 à 7, dans lequel le corps de boîtier (1) est une structure intégrée.

9. Dispositif de commande à main du type bague comprenant :
un corps de boîtier (1),
une poignée en forme d'anneau (2, 3) agencée pour définir un trou transversal pour contenir des doigts, le dispositif étant tenu par le trou par un doigt d'une main,
des moyens d'entrée de commande de direction (12) positionnés pour être actionnés par les doigts de la main qui tiennent le dispositif,
le dispositif de commande étant **caractérisé par**
un dispositif d'affichage (13) situé sur la surface du corps de boîtier (1),
moyennant quoi les moyens d'entrée de commande de direction (12) et le dispositif d'affichage (13) sont utilisés pour produire des signaux numériques ou analogiques pour commander le dispositif d'affichage (13), et dans lequel les moyens d'entrée de commande de direction (12) sont soit une boule roulante, soit un commutateur du type en croix.

10. Dispositif de commande à main du type bague selon la revendication 9, dans lequel le corps de boîtier (1) comprend deux fentes dans lesquelles la poignée en forme d'anneau (2) peut être montée par ressort.

11. Dispositif de commande à main du type bague selon la revendication 9, dans lequel une partie de la poignée en forme d'anneau (2, 3) est fixée au corps de boîtier (1) par des vis ou des boulons, ou est serrée et fixée dans le corps de boîtier (1).
